# NEUE EUROPÄISCHE PATENTSCHRIFT

(11) **EP 0 561 216 B2**
(45) Veröffentlichungstag und Bekanntmachung des Hinweises auf die Entscheidung über den Einspruch: **13.01.1999**
(45) Hinweis auf die Patenterteilung: 03.01.1996
(21) Anmeldenummer: 93103369.0
(22) Anmeldetag: 03.03.1993
(51) Int. Cl.: B29C 44/56, A01N 43/78

(54) **Schaumstoffplatten mit verbesserten Wärmedämmeigenschaften und Verfahren zu ihrer Herstellung**
Foam plates with improved thermal insulation properties and method for their fabrication
Plaques de mousse avec des propriétés thermo-isolantes améliorées et méthode pour les fabriquer

(30) Priorität: 19.03.1992 DE 4208759
(43) Veröffentlichungstag der Anmeldung: 22.09.1993
(73) Patentinhaber: BASF Aktiengesellschaft, 67063 Ludwigshafen (DE)
(72) Erfinder: Wassmer, Karl-Heinz, Dr., W-6703 Limburgerhof (DE); Hohwiller, Frieder, W-6702 Bad Dürkheim (DE)

(56) Entgegenhaltungen:
- EP-A- 0 062 882
- WO-A-85/00553
- DE-U- 8 504 326
- GB-A- 2 040 948

## Beschreibung

Die Erfindung betrifft Schaumstoffplatten mit verbesserten Wärmedammeigenschaften sowie ein Verfahren zu ihrer Herstellung. Die Erfindung betrifft insbesondere derartige Schaumstoffplatten, die eine Anisotropie der Art aufweisen, daß die Zellen in Richtung der Plattendicke gestaucht sind sowie ein Verfahren zur Nachbehandlung von bekannten Schaumstoffplatten durch zeitweiliges Zusammenpressen (Stauchen).

Schaumstoffplatten, beispielsweise aus Polyolefinschäumen oder aus Polystyrolextruder- und Polystyrolpartikels-chaum werden seit langem zur Wärme- und Schalldämmung eingesetzt.

Für die Schalldämmung, insbesondere Trittschalldämmung, werden vorzugsweise Schaumstoffplatten eingesetzt, die durch zeitweiliges Zusammenpressen in Richtung der Plattendicke elastifiziert wurden.

Beispielsweise ist die Verwendung von elastifizierten EPS-Dämmplatten (EPS: expandierbares Polystyrol) für die Trittschalldämmung nach DIN 18164, Teil 2, "Schaumkunststoffe als Dämmstoffe für das Bauwesen" bekannt. Derartige Platten müssen ein ausreichendes Federungsvermögen haben. Das Federungsvermögen wird nach DIN 18 164, Teil 2, durch die dynamische Steifigkeit s' (auch Trittschall-Verbesserungsmaß genannt) der Dämmschicht einschließlich der in ihr eingeschlossenen Luft gekennzeichnet.

Trittschalldämmplatten müssen aus bautechnischen Gründen eine möglichst geringe dynamische Steifigkeit bei einer relativ eng begrenzten Verformung unter Lasteinwirkung aufweisen (Differenz zwischen Lieferdicke bzw. Nenndicke und der Dicke unter Belastung, ausgedrückt als (d_{L}-d_{B})-Wert nach DIN 18164, Teil 2).

Dies bedeutet, daß der Stauchungsgrad (auch "Elastifizierungsgrad" genannt) und damit die Verformung des Schaumstoffgefüges nur in einem eng begrenzten Maße eingestellt werden kann.

Bei derbekannten Nachbehandlung von Schaumstoffplatten durch Stauchen (auch "Elastifizieren" genannt) werden Schaumstoffplatten mit einer Rohdichte (gleichbedeutend mit Dichte) typischerweise zwischen 8 und 10 kg/m³ bis zu einem maximalen Stauchungsmaß von 66% ihrer ursprünglichen Dicke zusammengepreßt, das für eine bestimmte Zeit (üblicherweise weniger als 60 Sekunden) aufrechterhalten wird.

Nach Aufhebung der Pressung bleibt eine geringe irreversible Verformung des Zeilgefüges, wobei die Zellen eine Anisotropie der Art aufweisen, daß das Verhältnis von langer zu kurzer Achse zwischen 1,15 und 1,25 liegt. Die beispielsweise bei einer 25 mm dicken Schaumstoffplatte aus Polystyrolpartikelschaum erzielten Werte der dynamischen Steifigkeit liegen um 10 N/cm³. Die (d_{L}-d_{B})-Werte liegen etwa zwischen 1 und 3 mm.

Bei der Verbesserung der Eigenschaften von Schaumstoffplatten ist neben der Schalldämmung insbesondere auch die Warmedammung von Bedeutung.

Die DE-U-85 04 326 beschriebt eine Dämmplatte aus gestauchten Polystyrol-Hartschaum mit einer Rohdichte von 21 bis 29 kg/m³ und einer dynamischen Steifigkeit von weniger als 20 MN/m³. Diese niedrige Steifigkeit als daß für die Schalldämmung und durch Schauchen der Schaumstoffplatte erreicht. Für eine ausreichend gute Schalldämmung genügt hier eine verhältnismäßig geringe Schauchung, die im Beispiel zu einem Verhältnis zwischen langer Achse und kurzer Achse der Zellen von 1,185 zur Folge hat. Der Druckschrift ist keim Hinweis darauf zu entnehmen, daß bei stärkeren schauchen auch eine Verbesserung der Wärmedämmung erzielt werden kann.

Aufgabe der vorliegenden Erfindung war es daher, die Wärmedämmeigenschaften der bekannten Schaumstoffplatten zu verbessern. Die Wärmeleitfähigkeit, insbesondere in Richtung der Plattendicke, sollte erniedrigt werden. Darüber hinaus sollten die Schalldämmeigenschaften verbessert werden.

Diese Aufgabe wird überraschend gelöst durch Schaumstoffplatten mit einer Rohdichte zwischen 15 und 45 kg/m³, wenn eine Anisotropie der Art vorliegt, daß die Zellen in Richtung der Plattendicke gestaucht sind, wobei in den gestauchten Zellen das Verhaltnis zwischen langer und kurzer Achse zwischen 1,2 und 1,6 liegt.

In den gestauchten Zellen der erfindungsgemäßen Schaumstoffplatten beträgt das Verhaltnis zwischen langer und kurzer Achse vorzugsweise zwischen 1,3 und 1,55 und besonders bevorzugt zwischen 1,35 und 1,5.

Gegenstand der Erfindung ist außerdem ein Verfahren zur Herstellung dieser Schaumstoffplatten durch zeitweiliges Zusammenpressen von üblichen und bekannten Schaumstoffplatten, wobei Schaumstoffplatten mit einer Rohdichte zwischen 11 und 40 kg/m³ bis zu einem maximalen Stauchungsmaß zwischen 50 und 90% ihrer ursprünglichen Dicke zusammengepreßt werden, dieses Stauchungsmaß für mindestens 10 Sekunden aufrechterhalten wird und anschließend die Stauchung aufgehoben wird.

Im erfindungsgemäßen Verfahren können Schaumstoffplatten oder Schaumstoffblöcke eingesetzt werden. In der Regel werden jedoch Schaumstoffblöcke eingesetzt, aus denen anschließend Schaumstoffplatten in der geeigneten Größe auf übliche und bekannte Weise senkrecht zur Elastifizierungsrichtung geschnitten werden.

Hierdurch wird auf sehr wirtschaftliche Weise in einem Schritt das erfindungsgemäße Verfahren für eine Vielzahl von zukünftigen Schaumstoffplatten durchgeführt. Außerdem gibt es keine negativen Einflüsse durch Randeffekte.

In der Beschreibung werden daher die Begriffe "Schaumstoffblöcke" und "Schaumstoffplatten" gleichbedeutend verwendet, sofern sich aus der entsprechenden Stelle nichts anderes ergibt.

Die Schaumstoffplatten können aus geschlossen- oder offenzelligem Polyolefinschaum, Phenolharzschaum, Polystyrolschaum oder Polyurethanschaum bestehen. Hiervon werden vorzugsweise überwiegend geschlossenzellige Schaumstoffe eingesetzt, insbesondere aus Polystyrol, Polyurethanen und Polyolefinen.

Die Schaumstoffplatten bestehen ganz besonders bevorzugt aus Polystyrolschaum. Gegenüber extrudiertem Polystyrolschaum wird bevorzugt Polystyrolpartikelschaum eingesetzt.

Die den erfindungsgemäßen Schaumstoffplatten zugrundeliegenden, vorzugsweise isotropen Schaumstoffplatten werden auf übliche und bekannte Weise hergestellt.

Beispielsweise werden Schaumstoffblöcke aus Polystyrolpartikelschaum dadurch hergestellt, daß treibmittelhaltige expandierbare Polystyrolperlen durch Erhitzen auf Temperaturen oberhalb ihres Erweichungspunktes, beispielsweise mit Heißluft oder vorzugsweise mit Dampf, expandiert werden. Die erhaltenen Schaumstoffpartikel können nach dem Abkühlen und gegebenenfalls einer Zwischenlagerung durch erneutes Erhitzen in einer nicht gasdicht schließenden Form zu einem Schaumstoffblock verschweißt werden.

Geeignete expandierbare Polystyrolperlen sind beispielsweise in der EP-B 106 129, der EP-A 383 133 und der DE-A 39 15 602 beschrieben.

Vorzugsweise werden expandierbare Polystyrolperlen mit einer Größe zwischen 1 und 2 mm eingesetzt.

Die frisch hergestellten Schaumstoffplatten werden vor der Durchführung des erfindungsgemäßen Verfahrens vorzugsweise für mindestens 2 Stunden und besonders bevorzugt für mindestens 6 Stunden gelagert.

Die im erfindungsgemäßen Verfahren eingesetzten bekannten Schaumstoffplatten oder Schaumstoffblöcke haben in der Regel Rohdichten zwischen 11 und 40 kg/m³.

Im Vergleich hierzu haben die erfindungsgemäßen Schaumstoffplatten oder Schaumstoffblöcke in der Regel Rohdichten zwischen 15 und 45 kg/m³. Der Effekt der Erfindung ist allerdings besonders ausgeprägt bei Rohdichten oberhalb von 20 kg/m³. Die Rohdichte ist daher bevorzugt zwischen 20 und 30 kg/m³.

Infolge der Durchführung des erfindungsgemäßen Verfahrens ergibt sich eine bleibende Zunahme der Rohdichte der Schaumstoffblöcke um bis zu ca. 50%, bezogen auf die Rohdichte vor Durchführung des Verfahrens.

Beim erfindungsgemäßen Verfahren werden die Schaumstoffblöcke im allgemeinen in Richtung einer Flächennormalen auf ein maximales Stauchungsmaß zwischen 50 und 90%, vorzugsweise zwischen 70 und 85% und besonders bevorzugt zwischen 70 und 80% ihrer ursprünglichen Dicke zusammengepreßt. In Abhängigkeit von der gewünschten bleibenden Stauchung bzw. den gewünschten Eigenschaften können die Schaumstoffplatten unter Anwendung von bestimmten Programmen für die Geschwindigkeit der Stauchung und der anschließenden Entlastung und gegebenenfalls unter Einhaltung bestimmter Halteperioden bis zu einem maximalen Stauchungsmaß von 90% gestaucht werden.

Im allgemeinen wird die Stauchung durch Annäherung zweier planparalleler Metallplatten mit einer konstanten Stauchgeschwindigkeit und ohne eine zwischengeschaltete Halteperiode bis zu einem maximalen Stauchungsmaß durchgeführt. Beim maximalen Stauchungsmaß werden die Blöcke dann für eine bestimmte Zeit, mindestens jedoch 10 Sekunden, gehalten. Anschließend wird der Abstand zwischen den beiden Metallplatten wieder vergrößert, im allgemeinen ebenfalls mit einer konstanten Entlastungsgeschwindigkeit.

Die dabei angewandte Stauchgeschwindigkeit beträgt in der Regel zwischen 1 und 150, vorzugsweise zwischen 30 und 95 und besonders bevorzugt zwischen 70 und 80 cm/min.

Die Schaumstoffblöcke werden im allgemeinen für eine Zeitdauer von 10 bis 120 Sekunden, vorzugsweise von 30 bis 90 Sekunden beim maximalen Stauchungsmaß gepreßt.

Die Stauchung kann auf übliche und bekannte Weise in Pressen für EPS durchgeführt werden. Geeignete Pressen werden beispielsweise von der Maschinenfabrik Paul Ott in 7050 Waiblingen-Neustadt vertrieben.

Es ist jedoch auch möglich, daß die Stauchung mit einer zeitlich sich verändernden Stauchgeschwindigkeit und mit zwischengeschalteten Halteperioden unterschiedlicher Dauer durchgeführt wird.

Es ist beispielsweise möglich, die Stauchung so durchzuführen, daß zunächst bis zu einem Stauchungsmaß unterhalb des maximalen Stauchungsmaßes zusammengepreßt wird und bereits bei diesem Stauchungsmaß eine Halteperiode bestimmter Dauer eingelegt wird.

Daneben kann es vorteilhaft sein, wenn das Pressen mit einer überlagerten Vibration durchgeführt wird ("Vibrationspressen").

Nach vollständiger Entlastung werden die nach dem erfindungsgemäßen Verfahren nachbehandelten Schaumstoffblöcke in der Regel für mindestens 5 Stunden unter Normalbedingungen abgelagert. Hierdurch entspannen sich die Schaumstoffblöcke auf ihr endgültiges Maß. Besonders vorteilhaft hat sich eine Ablagerungszeit der gestauchten Blöcke von ein bis zwei Tagen herausgestellt.

Anschließend können aus diesen Schaumstoffblöcken durch Schneiden senkrecht zur Elastifizierungsrichtung auf übliche und bekannte Weise Schaumstoffplatten erhalten werden. Diese Schaumstoffplatten haben üblicherweise einen Querschnitt von mindestens 50 cm².

Die erfindungsgemäßen Schaumstoffplatten und das erfindungsgemäße Verfahren haben mehrere Vorteile. So ist es möglich, daß im Hochbau zur Erreichung bestimmter Wärmedurchlaßwiderstände (siehe DIN 4108, Teil 2) geringere Dämmschichtdicken und damit weniger Material benötigt werden bzw. das für vorgegebene Dämmstoffdicken der zugehörige Wärmedurchlaßwiderstand kleiner im Vergleich zur nicht behandelten Schaumstoffplatte ist.

Häufig ist die Plattendicke durch die Anwendung festgelegt. Hierbei ist es nun ein großer Vorteil der erfindungsgemäßen Schaumstoffplatten, daß man vorgegebene Wärmeleitfähigkeiten bereits mit Schaumstoffplatten geringerer Rohdichte erreicht. Beispielsweise ist die Wärmeleitfähigkeit von erfindungsgemäßen Schaumstoffplatten, bei denen die Rohdichte 20 kg/m³ beträgt, ebenso niedrig wie bei herkömmlichen Schaumstoffplatten mit einer Rohdichte von 28 kg/m³. Es ergibt sich also eine Materialersparnis von 30 bis 50 %.

Ein weiterer überraschender Vorteil ist auch der Umstand, daß das Federungsvermögen (s') im für die Bauanwendung üblichen Wärmedämmplatten-Rohdichtebereich 15 bis 30 kg/m³ unabhängig von der Rohdichte und der Plattendicke auf dem für die Verbesserung der Wärmeleitfähigkeit notwendigen niedrigen Niveau von kleiner/gleich 10 N/cm³ eingestellt werden kann. Die dynamische Steifigkeit in Richtung der Plattendicke beträgt erfindungsgemäß üblicherweise zwischen 4 und 10 N/cm³.

Dadie Dauerdruckbelastung beispielsweise von EPS-Platten linear von der Schaumstoff-Rohdichte beeinflußt wird, kann der durch die Elastifizierung bedingte geringe Abfall der Druckspannung auch bei druckbeanspruchten Anwendungen durch entsprechend höhere Schaumstoff-Rohdichten kompensiert werden.

### Beispiele

In den Beispielen und Vergleichsbeispielen wurden Schaumstoffplatten aus Polystyrolpartikelschaum eingesetzt.

Für die Stauchung der Polystyrolpartikelschaumblöcke wurde eine Presse vom Typ 300 K 25 der Maschinenfabrik Paul Ott in 7050 Waiblingen-Neustadt eingesetzt.

Die Stauchung wurde zwischen zwei planparallelen Platten mit einer Preßkraft von 25 MP und einer Stauchgeschwindigkeit von 75 cm/min durchgeführt. Die Verweilzeit bei der maximalen Stauchung betrug jeweils 1 min. Anschließend wurden die beiden Platten mit einer Entlastungsgeschwindigkeit von 192 cm/min auseinandergefahren.

Die gestauchten Blöcke wurden nach der Entlastung für 2 Tage unter Normalbedingungen gelagert.

An den erfindungsgemäßen, durch Stauchen nachbehandelten Schaumstoffplatten und an unbehandelten Schaumstoffplatten wurde die Wärmeleitfähigkeit nach DIN 52612, Teil 1, bestimmt.

Darüberhinaus wurde der Einfluß von verschiedenen maximalen Stauchungsmaßen bei Schaumstoffplatten mit unterschiedlichen Dichten untersucht.

Die Anisotropie wurde durch Auswertung von Schaumstoffschnittbildern unterdem Lichtmikroskop bestimmit. Hierzu wurden Schaumstoffzellen ausgemessen und die Anisotropie als Verhältnis von langer zu kurzer Achse bestimmt.

**Tabelle**

| Beispiel | Rohdichte kg/m³ | Rohdichte vor St. kg/cm³ | max. Stauchung % | Wärmeleitfähigkeit mW/mK | Anisotropie |
|---|---|---|---|---|---|
| 1 (Vgl) | 10 | 10,0 | 0 | 41,7 | 1,0 |
| 2 (Vgl) | 10 | 8,3 | 50 | 41,5 | 1,2 |
| 3 (Vgl) | 13 | 10,0 | 0 | 38,7 | 1,0 |
| 4 (Vgl) | 13 | 10,4 | 66 | 38,2 | 1,25 |
| 5 (Vgl) | 13 | 10,0 | 80 | 37,6 | 1,30 |
| 6 (Vgl) | 13 | 9,6 | 83 | 36,7 | 1,35 |
| 7 (Vgl) | 15 | 15,0 | 0 | 37,0 | 1,0 |
| 8 | 15 | 12,0 | 50 | 36,5 | 1,25 |
| 9 | 15 | 11,7 | 66 | 35,6 | 1,28 |
| 10 | 15 | 11,1 | 80 | 34,3 | 1,35 |
| 11 (Vgl) | 20 | 20,0 | 0 | 34,8 | 1,0 |
| 12 | 20 | 15,4 | 66 | 33,0 | 1,3 |
| 13 | 20 | 14,3 | 83 | 32,3 | 1,4 |
| 14 (Vgl) | 24 | 24,0 | 0 | 33,5 | 1,0 |
| 15 | 24 | 18,5 | 50 | 33,2 | 1,3 |
| 16 | 24 | 17,8 | 66 | 32,7 | 1,35 |
| 17 | 24 | 17,3 | 80 | 32,4 | 1,39 |
| 18 (Vgl) | 27 | 27,0 | 0 | 33,4 | 1,0 |
| 19 | 27 | 20,3 | 50 | 32,4 | 1,33 |
| 20 | 27 | 18,0 | 83 | 32,0 | 1,5 |
| 21 (Vgl) | 30 | 30,0 | 0 | 32,9 | 1,0 |
| 22 | 30 | 22,4 | 50 | 32,7 | 1,34 |
| 23 (Vgl) | 35 | 30,0 | 0 | 33,5 | 1,0 |
| 24 | 35 | 25,7 | 50 | 33,2 | 1,36 |
| 25 | 35 | 24,6 | 66 | 32,7 | 1,42 |
| 26 | 35 | 23,6 | 80 | 32,4 | 1,48 |

## Patentansprüche

1. Schaumstoffplatten aus Polystyrolpartikelschaum mit einer Anisotropie der Art, daß die Zellen in Richtung der Plattendicke gestaucht sind, wobei die Schaumstoffplatten eine Rohdichte Zwischen 20 und 45 kg/m³ haben und in den gestauchten Zellen das Verhältnis zwischen langer und kurzer Achse zwischen 1,3 und 1,6 liegt.

2. Verfahren zur Herstellung von Schaumstoffplatten gemäß Anspruch 1 durch Nachbehandlung von üblichen und bekannten Schaumstoffplatten durch Zusammenpressen, wobei Schaumstoffplatten mit einer Rohdichte zwischen 11 und 40 kg/m³ bis zu einem maximalen Stauchungsmaß zwischen 50 und 90 % ihrer ursprünglichen Dicke zusammengepreßt werden, dieses Stauchungsmaß für mindestens 10 Sekunden aufrechterhalten wird und anschließend die Stauchung aufgehoben wird.

3. Verfahren nach Anspruch 2, dadurch gekennzeichnet, daß die Schaumstoffplatten bis zu einem maximalen Stauchungsmaß zwischen 70 und 85 % ihrer ursprünglichen Dicke zusammengepreßt werden.

4. Verfahren nach Anspruch 2, dadurch gekennzeichnet, daß das maximale Stauchungsmaß während einer Zeitspanne zwischen 30 und 90 Sekunden aufrechterhalten wird.

5. Verfahren nach Anspruch 2, dadurch gekennzeichnet, daß das Zusammenpressen der Schaumstoffplatten durch Annäherung zweier planparalleler Platten mit einer konstanten Stauchgeschwindigkeit zwischen 1 und 150 cm/min geschieht.

## Claims

1. A foam board made of polystyrene particle foam having an anisotropy of the type that the cells are flattened in the direction of the board thickness, where the foam board has a density of from 20 to 45 kg/m³ and the ratio between the long and short axes in the flattened cells is from 1.3 to 1.6.

2. A process for the production of a foam board as claimed in claim 1 by aftertreating a conventional and known foam board by compression, in which the foam board having a density of from 11 to 40 kg/m³ is compressed to a maximum extent of from 50 to 90% of its original thickness, this compression is maintained for at least 10 seconds, and the compression is subsequently released.

3. A process as claimed in claim 2, wherein the foam board is flattened to a maximum compression of from 70 to 85% of its original thickness.

4. A process as claimed in claim 2, wherein the maximum compression is maintained for a period of from 30 to 90 seconds.

5. A process as claimed in claim 2, wherein the foam board is flattened by moving two planeparallel plates toward one another at a constant compression rate of from l to 150 cm/min.

## Revendications

1. Plaques en substances alvéolaires, présentant une anisotropie d'un type faisant que les cellules sont écrasées dans la direction de l'épaisseur de la plaque, dans lesquelles les plaques en matériaux alvéolaires ont une densité apparente comprise entre 20 et 45 kg/m³ et, dans les cellules écrasées, le rapport entre l'axe long et l'axe court est situé entre 1,3 et 1,6.

2. Procédé de fabrication de plaques en substances alvéolaires selon la revendication 1, par retraitement de plaques en substances alvéolaires usuelles et connues par compression, dans lequel les plaques en substances alvéolaires ayant une densité apparente comprise entre 11 et 40 kg/m³ sont comprimées jusqu'à atteinte d'un degré d'écrasement maximal compris entre 50 et 90 % de leur épaisseur d'origine, ce degré d'écrasement étant maintenu pendant au moins 10 secondes puis l'écrasement cessant.

3. Procédé selon la revendication 2, caractérisé en ce que les plaques en substances alvéolaires sont comprimées jusqu'à un degré d'écrasement maximal compris entre 70 et 85 % de leur épaisseur d'origine.

4. Procédé selon la revendication 2, caractérisé en ce que le degré d'écrasement maximal est conservé pendant un intervalle de temps compris entre 30 et 90 secondes.

5. Procédé selon la revendication 2, caractérisé en ce que la compression des substances alvéolaires s'effectue par approche de deux plaques planes parallèles avec une vitesse d'écrasement constante comprise entre 1 et 150 cm/min.
